# EUROPÄISCHE PATENTSCHRIFT

(11) **EP 2 558 240 B1**
(45) Veröffentlichungstag und Bekanntmachung des Hinweises auf die Patenterteilung: **12.06.2019**
(21) Anmeldenummer: 11719445.6
(22) Anmeldetag: 12.04.2011
(51) Int. Cl.: B23K 1/19, B23K 9/173, B23K 9/23, B23K 33/00

(54) **VERFAHREN ZUM STOFFSCHLÜSSIGEN FÜGEN**
BONDING METHOD
PROCÉDÉ POUR JOINDRE MÉTALLURGIQUEMENT

(30) Priorität: 21.04.2010 AT 6572010; 12.04.2010 AT 5872010
(43) Veröffentlichungstag der Anmeldung: 20.02.2013
(73) Patentinhaber: voestalpine Stahl GmbH, 4020 Linz (AT)
(72) Erfinder: LEITNER, Alois, A-4852 Weyregg am Attersee (AT); RECHBERGER, Roland, A-4221 Steyregg (AT)
(74) Vertreter: Jell, Friedrich
(86) Internationale Anmeldenummer: PCT/AT2011/000177
(87) Internationale Veröffentlichungsnummer: WO 2011/127506

(56) Entgegenhaltungen:
- WO-A1-2004/030856
- GB-A- 964 743
- GB-A- 1 117 158
- JP-A- 58 100 978
- US-A1- 2009 120 919

## Beschreibung

Die Erfindung bezieht sich auf ein Verfahren zum stoffschlüssigen Fügen von zwei einen unterschiedlichen Schmelzpunkt aufweisenden Blechen, von denen das eine Endblech einen Leichtmetallwerkstoff, insbesondere Aluminiumwerkstoff, und das andere Anschlussblech einen Eisen- und/oder Titanwerkstoff aufweist, wobei auf wenigstens einer der geneigt zueinander verlaufenden Stoßflächen der Stoßkante des Anschlussblechs wenigstens teilweise eine Beschichtung vorzugsweise auf einer Zink- oder Aluminiumbasis vorgesehen ist, bei welchem Verfahren beide Bleche aneinanderstoßend unter Verwendung eines Zusatzwerkstoffs auf Aluminiumbasis entlang deren gemeinsamen Stoßstelle schweißgelötet gefügt werden.

### Stand der Technik

Um Stahl- und Aluminiumbleche miteinander stoffschlüssig fügen zu können, ist es aus dem Stand der Technik bekannt (WO2004030856A1 und WO2006012659A1), an einer abgeflachten Stoßkante des Stahlblechs eine Beschichtung vorzusehen, um damit das durch ein Schweiß-Lötverfahren geschmolzene Aluminium über eine erhöhte Anbindungslänge am Stahlblech auftragen zu können. Bei bekannten Schweiß-Lötverfahren, bei denen das Aluminium aufgeschmolzen und sich stahlseitig eine Lötverbindung ausbildet, wird die abgeflachte Stoßkante des Stahlblechs an eine stumpfe Stoßkante des Aluminiumblechs angestoßen, wonach dann unter Verwendung eines Zusatzwerkstoffs beide Bleche miteinander schweißgelötet gefügt werden. Entscheidend für die Qualität der Naht sowie die Prozesssicherheit des Schweiß-Lötverfahrens hat sich nun die Anbindungslänge, die Beschichtung der Stoßkante sowie in diesem Zusammenhang die Temperatur des bzw. der Wärmeeintrag in den Fügebereich herausgestellt. So soll auf der einen Seite die Anbindungslänge lang sein, um der Naht bzw. der Verbindung hohe Belastungen zumuten zu können, was vergleichsweise hohe Temperaturen für einen breiten Fügebereich fordert, auf der anderen Seite soll aber die Temperatur im Fügebereich niedrig sein, um damit dem Wachstum des Phasensaums aus Metallmischverbindungen entgegenzuwirken, um damit nicht eine verminderte Festigkeit in Kauf nehmen zu müssen. Diese gegeneinander wirkenden Kriterien führen daher meist zu einen Kompromiss zwischen Prozesssicherheit und Festigkeit, wodurch meist hohe Festigkeiten nicht erreicht werden können, insbesondere wenn dünne Bleche verarbeitet werden sollen, bei denen besonders auf die Temperatur im Fügebereich geachtet werden muss.

Außerdem sind aus dem Stand der Technik (EP0288884B1) verschiedenste Nut- und Federprofilierungen bekannt, die zwischen zwei Blechen unterschiedlicher Materialien vorgesehen werden können. Die Nuten dienen dazu, die Bleche einfach zueinander zentrieren zu können bzw. im Bereich der Schweißnaht keine wesentliche Biegung der aneinander stoßenden Bleche in Kauf nehmen zu müssen, wenn mit einem Laserschweißgerät eine stoffschlüssige Verbindung geschaffen werden soll. Eine Lehre zu einem Schweiß-Lötverfahren zum Fügen von Stahl- und Aluminiumblechen bzw. eine Verbesserung solch einer schwer herzustellenden Verbindung zwischen diesen Blechen kann der EP0288884B1 nicht entnommen werden.

### Darstellung der Erfindung

Es ist daher die Aufgabe der Erfindung, ausgehend vom eingangs geschilderten Stand der Technik ein Schweiß-Lötverfahren zu schaffen, mit dem auf einfache Weise eine hohe Prozesssicherheit samt hoher Verbindungsfestigkeit erreicht werden kann. Außerdem soll das Verfahren schnell eine stoffschlüssige Verbindung schaffen können.

Die Erfindung löst die gestellte Aufgabe dadurch, dass vor dem Fügen an der Stoßkante des Endblechs eine Ausnehmung zur Aufnahme zumindest eines Teils der beschichteten Stoßkante des Anschlussblechs eingebracht wird, wobei beim Fügen wenigstens teilweise über eine, die Beschichtung des Anschlussblechteils überdeckende Ausnehmungsflanke der Ausnehmung schweißgelötet wird.

Wird vor dem Fügen an der Stoßkante des Endblechs eine Ausnehmung zur Aufnahme zumindest eines Teils der beschichteten Stoßkante des Anschlussblechs eingebracht, wobei beim Fügen wenigstens teilweise über eine, die Beschichtung des Anschlussblechteils überdeckende Ausnehmungsflanke der Ausnehmung schweißgelötet wird, dann kann damit nicht nur eine aus dem Stand der Technik einfache Positionierung der Bleche zueinander ermöglicht werden, sondern es kann damit auch die Festigkeit einer Schweiß-Lötverbindung zwischen den Blechen besonders verbessert werden. Dieser Vorteil erschließt sich nämlich nicht nur durch das Ineinandergreifen der Bleche, sondern insbesondere durch den Schutz der Beschichtung des Anschlussblechs während des Fügens, weil diese Beschichtung durch die Ausnehmungsflanke überdeckt und damit vor dem Lichtbogen des Brenners geschützt werden kann. Beispielsweise kann so ein Verdampfen der Beschichtung erschwert werden, so dass der Fügebereich eine hohe Prozesssicherheit -trotz vergleichsweise langer Anbindungslänge zwischen den Blechen- aufweist. Selbst hohe Schweiß-Lötgeschwindigkeiten können daher ermöglicht werden, weil die Beschichtung vor Schäden, beispielsweise durch den Wärmeeintrag oder durch Plasma-Wechselwirkungen des Schweißbogens des Brenners, geschützt werden kann. Insbesondere aber hat sich dieses "Ineinandergreifen" der Bleche als vorteilhaft hinsichtlich der Reduktion des Phasensaums herausgestellt. Es kann nämlich durch diese Anordnung auch die Temperatur im Fügebereich aufgrund eines verbesserten Wärmeübergangs zwischen den Blechen vermindert werden, was selbst bei dünnen Blechen vergleichsweise hohe Nahtfestigkeiten ermöglichen kann. Das erfindungsgemäße Verfahren ist daher nicht nur schnell und prozesssicher, sondern vielseitig anwendbar und kann gleichzeitig hohe Verbindungsfestigkeiten schaffen sowie gewährleisten, auch wenn beispielsweise Stahlbleche und Aluminiumbleche bzw. Bleche mit einer Aluminiumlegierung fest verbunden werden sollen. Im Allgemeinen wird erwähnt, dass eine derartige Ausnehmung in ein Blech beispielsweise eingefräst, eingeschnitten, eingepresst oder auch eingebrannt werden kann. V-förmige, u-förmige, halbkreisförmige und dergleichen ausgestaltete Ausnehmungen sind denkbar. Des Weiteren sind auch Beschichtungen in Form von Folien am Anschlussblech vorstellbar.

Wird im Endblech eine Ausnehmung derart eingebracht, dass deren beiden Ausnehmungsflanken beim Fügen teilweise beide Stoßflächen der Stoßkante des Anschlussblechs überdecken, dann kann die Beschichtung auf beiden Stoßkantenseiten auf einfache Weise gegenüber einem Verdampfen beim Fügen geschützt werden. Außerdem können beide Ausnehmungsflanken für eine erhöhte Anbindungslänge sorgen, zumal vermindert Lotmaterial beim Fügen in den Fügebereich eingebracht werden muss.

Das einzubringende Lotmaterial kann noch weiter vermindert werden, wenn die Ausnehmung in die Stoßkante des Endblechs eingepresst wird, weil dadurch der Leichtmetallwerkstoff, insbesondere Aluminiumwerkstoff, im Fügebereich nicht massenverringert wird, wie dies beispielsweise von Fräsverfahren bekannt ist. Außerdem kann bei diesem Verfahren ein Anfall von Spänen vermieden und damit auch eine Nacharbeitung der Ausnehmung entfallen.

Vorteilhafte Verfahrensbedingungen können sich ergeben, wenn die Stoßkante des Endblechs für die beiden Ausnehmungsflanken eingeschlitzt und von diesen Ausnehmungsflanken wenigstens eine für die Ausnehmung aufgebogen wird. Solch ein Aufbiegen kann beispielsweise nach einem Schneideverfahren durchgeführt werden. Neben dem, dass der Leichtmetallwerkstoff im Fügebereich nicht massenverringert wird, kann sich dadurch auch eine wenigstens teilweise elastische Aufnahme ergeben, die einer Kontur der Stoßkante des Anschlussblechs folgen kann. Dadurch kann beispielsweise ein besonders anliegender Übergang zwischen den Blechen geschaffen werden, was zu vorteilhaften Verfahrensbedingungen führen kann.

Wird die Stoßkante des Anschlussblechs in die Ausnehmung eingepresst, um diese Ausnehmung wenigstens teilweise aufzuweiten, dann können vereinfachte Verfahrensbedingungen zur Formgebung der Ausnehmung geschaffen werden, weil beispielsweise auf die Ausgestaltung der Stoßkante des Anschlussblechs nicht besonders geachtet werden muss. Der Form der Stoßkante entsprechend kann nämlich eine Angleichung der Ausnehmung stattfinden, so dass selbst Fertigungstoleranzen auf einfache Weise die Verbindung und auch die Prozesssicherheit nicht wesentlich beeinflussen können. Die Ausnehmung wird sich nämlich stets anliegend an das Anschlussblech ausformen, so dass stets und auch auf einfache Weise ein besonderer Nahtübergang sichergestellt werden kann.

Wird in eine Stoßfläche des Anschlussblechs ein wellenförmiger Verlauf eingebracht, dann kann die durch das Schweißlötverfahren erreichbare Festigkeit noch weiter erhöht werden, weil neben einer verlängerten Anbindungslänge auch unterschiedliche Anlagewinkel entstehen können.

Konstante Verfahrensbedingungen können erreicht werden, wenn zum Fügen die aneinanderstoßenden Bleche in kühlbare und voneinander beabstandete Spannbacken eingespannt werden. Insbesondere durch eine Kühlung der Spannbacken kann während des Fügens deren Temperatur konstant gehalten werden, so dass mit verminderten Parameteränderungen beim Schweißlöten gerechnet werden kann.

Vorteilhafte Verfahrensbedingungen ergeben sich, wenn über beide Ausnehmungsflanken gleichzeitig zur Schaffung eines gemeinsamen Fügebereichs schweißgelötet wird. Damit können nicht nur gleiche Schweißparameter auf beiden Flankenseiten eingestellt werden, wodurch eine vergleichsweise symmetrische Ausgestaltung der Nahtgeometrie ermöglicht werden kann, sondern es kann auch die Temperatur im Fügebereich für erhöhte Festigkeiten vermindert werden. Der beidseitige Wärmeeintrag auf die Stoßstelle kann nämlich gegenüber einem einseitigen Wärmeeintrag für eine verminderte Verlustwärme im Fügebereich sorgen, so dass insgesamt trotz gleicher Prozessbedingungen mit einem verminderten Phasensaum gerechnet werden kann, wodurch sich die Erfindung besonders auszeichnet. Hinzu kommt, dass auf Grundlage einer verminderten Temperatur im Fügebereich auch vergleichsweise dünne Bleche miteinander verbindbar werden können.

Das erfindungsgemäße Verfahren kann zur Schaffung eines Werkstücks vorteilhaft verwendet werden, indem zwei unterschiedliche Schmelzpunkte aufweisenden Blechen, von denen das eine Endblech einen Leichtmetallwerkstoff, insbesondere Aluminiumwerkstoff, und das andere Anschlussblech einen Eisen- und/oder Titanwerkstoff aufweist, stoffschlüssig gefügt werden. Im Allgemeinen wird erwähnt, dass das Aluminiumblech aus verschiedensten Aluminiumlegierungen gefertigt sein kann. Als vorteilhaft zeigte sich die Verwendung der 5xxx, 6xxx und 7xxx Legierungsreihe. Das Stahlblech kann insbesondere ein TRIP- (Transformation Induced Plasticity), TWIP- (Twinning Induced Plasticity), DP- (Dualphasen) oder CP- (Complexphasen) Stahl sein oder aus einer anderen hochfesten Legierung bestehen.

Außerdem hat sich für ein Schweiß-Lötverfahren die Verwendung eines einen Leichtmetallwerkstoff, insbesondere Aluminiumwerkstoff, aufweisenden Blechs herausgestellt, das eine, aufgebogene Ausnehmungsflanken aufweisende Ausnehmung zur Aufnahme einer beschichteten Stoßkante eines anstoßenden Anschlussblechs aufweist. Durch solch eine Aufnahme kann nämlich nicht nur die Beschichtung geschützt, sondern auch ein besonderer Wärmeübergang zwischen den anstoßenden Blechen ermöglicht werden, weil die Ausnehmungsflanken zumindest bereichsweise ein Anliegen der Bleche gewährleisten können.

### Kurze Beschreibung der Zeichnung

In den Figuren ist beispielsweise der Erfindungsgegenstand anhand von mehreren Ausführungsbeispielen näher dargestellt. Es zeigen
- Fig. 1: eine Darstellung einer zu fügenden Stoßstelle nach dem Stand der Technik,
- Fig. 2: eine Darstellung einer erfindungsgemäßen Stoßstelle für das erfindungsgemäße Verfahren zum Fügen,
- Fig. 3: eine gegenüber Fig. 2 veränderte Stoßstelle,
- Fig. 4: eine weitere alternative Ausgestaltung der nach Fig. 2 und 3 dargestellten Stoßstelle,
- Fig. 5a und 5b: eine Vorrichtung zur Durchführung des erfindungsgemäßen Verfahrens,
- Fig. 6: eine schematische Schnittansicht auf eine Schweißlötverbindung und
- Fig. 7 und 8: Schnittansichten auf Schweißlötverbindungen nach zwei Ausführungsbeispielen.

### Weg zur Ausführung der Erfindung

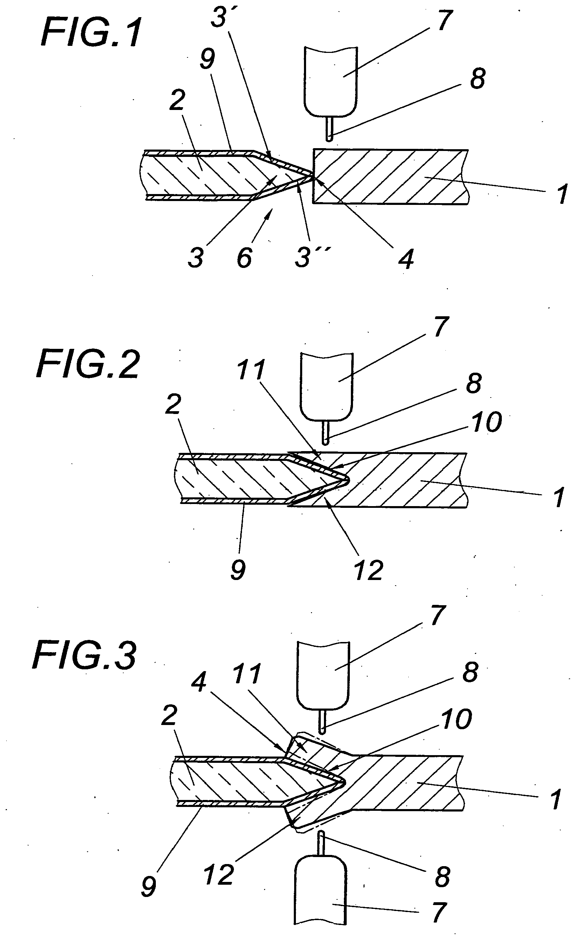

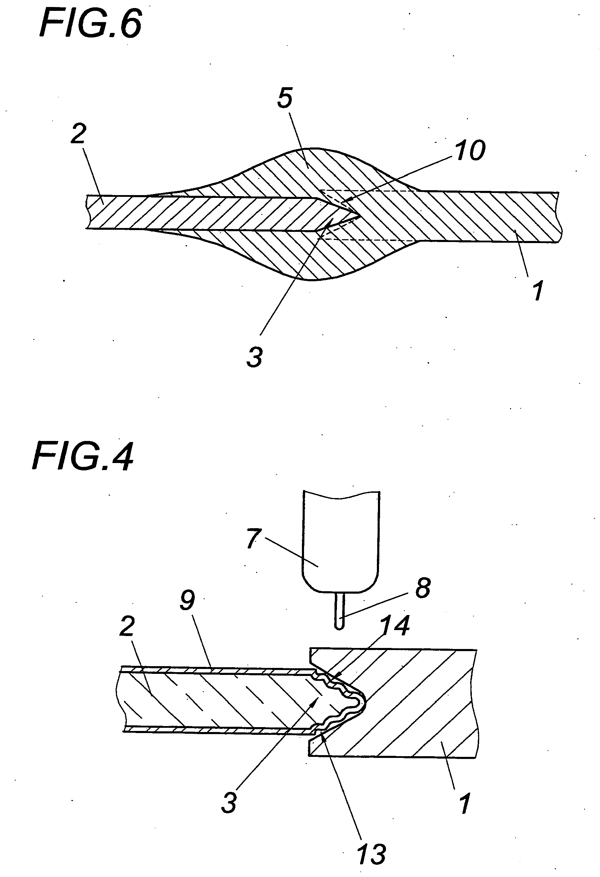

Nach Fig. 1 ist das bekannte Verfahren zum stoffschlüssigen Fügen von zwei im jeweiligen Schmelzpunkt unterschiedlichen Blechen 1 und 2 dargestellt. So weist das Endblech 1 einen Aluminiumwerkstoff bzw. eine Aluminiumlegierung und das Anschlussblech 2 einen Stahlwerkstoff auf. Am Anschlussblech 2 ist bekanntermaßen eine abgeflachte Stoßkante 3 vorgesehen, die zueinander geneigte Stoßflächen 3' und 3" ausbildet, nämlich v-förmig zulaufend. Die Stoßkante 3 stößt an das Endblech 1 an, und zwar an dessen stumpfen Stoßkante 4. Beim Fügen der aneinanderstoßenden Bleche 1 und 2 wird nun unter Verwendung eines Zusatzwerkstoffs 5, der in Fig. 6 nur andeutungsweise erkennbar ist, in dem die Masse im Fügebereich 6 nach dem Schweiß-Lötverfahren erhöht ist, in diesen Fügebereich 6 eingebracht, was von der Schweißeinrichtung 7 ermöglicht wird. Diese Schweißeinrichtung 7 schafft nun eine stoffschlüssige Verbindung mit Hilfe eines Schweiß-Lötverfahrens zwischen den in Fig. 1 dargestellten aneinanderstoßenden Blechen 1 und 2. Im Allgemeinen wird hier erwähnt, dass die Bleche 1, 2 verschiedensten Konturenverlauf folgend nicht zwangsweise geradlinige Kanten aufweisen müssen. Auch muss die Stoßkante 3 des Anschlussblechs 2 nicht kontinuierlich vorliegen, wobei das Endblech 1 über Bereiche auf seiner Stoßkante 4 aufweisen kann, die keine Ausnehmung aufweisen.

Nun hat sich herausgestellt, dass nicht nur aufgrund eines erhöhten Einbringens von Verbindungsmaterial bzw. Zusatzwerkstoff 5 die Verbindung zwischen den Blechen 1 und 2 negativ beeinflusst werden kann, sondern es hat sich auch beim Schweißlöten als problematisch herausgestellt, dass durch den Lichtbogen 8 der Schweißeinrichtung 7 eine Beschichtung 9 des Anschlussblechs 2 beschädigt werden kann. Diese Beschichtung 9 ist jedoch besonders wichtig für die Durchführbarkeit und Prozesssicherheit des Schweiß-Lötverfahrens, insbesondere weil damit die Benetzung des Anschlussblechs 2 mit Material des Endblechs 1 und/oder des Zusatzwerkstoffs 5 funktional sichergestellt wird. Diese Schwierigkeiten sind insbesondere bei geforderten langen Anbindungslängen zwischen den Blechen 1 und 2 sowie bei dünnen Blechen 1 und 2 für die Wertigkeit der stoffschlüssigen Verbindung entscheidend.

Erfindungsgemäß wird das Schweiß-Lötverfahren verbessert, indem in das Endblech 1 eine Ausnehmung 10 derart eingebracht wird, dass diese Ausnehmung zumindest Teile der beschichteten Stoßkante 3 des Anschlussblechs 2 aufnehmen kann, was der Fig. 2 entnommen werden kann. Wird nun weiters beim Fügen wenigstens teilweise über eine, die Beschichtung 9 des Anschlussblechteils überdeckende Ausnehmungsflanke 11 der Ausnehmung 10 schweißgelötet, dann kann die Beschichtung 9 vom Lichtbogen 8 der Schweißeinrichtung 7 zumindest von der direkten Beaufschlagung geschützt werden. Die darüberliegende Ausnehmungsflanke 11 schützt somit diese als Benetzungsschicht wirkende Beschichtung 9, was nicht nur eine erhöhte Anbindungslänge zwischen Endblech 1 und Anschlussblech 2 sicherstellen, sondern auch ein besonders prozesssicheres Schweiß-Lötverfahren gewährleisten kann.

Beide Ausnehmungsflanken 11 und 12 überdecken teilweise beide Stoßflächen 3', 3" der abgeflachten Stoßkante 3 des Anschlussblechs 2, was vorteilhaft ein Verdampfen der Benetzungsschicht auf der dem Lichtbogen 8 abgewandten Stoßkante 3" des Anschlussblechs 2 vermindern kann. Auch in diesem Bereich ist sohin für eine erhöhte Prozesssicherheit mit einer vergleichsweise festen Schweiß-Lötverbindung zu rechnen.

Die Ausnehmung 10 kann auf eine einfache Weise hergestellt werden, wenn das Endblech 1 entlang seiner Stirnseite aufgeschlitzt, beispielsweise durch ein Schneide- oder Pressverfahren, und dann v-förmig aufgebogen wird. Außerdem kann dadurch der Lotverbrauch reduziert werden, weil der Werkstoff des Endblechs 1 dem Fügebereich 6 ohne Abspanung zur Verfügung steht, was in der Fig. 3 als alternative Ausgestaltung der Ausnehmung 10 erkannt werden kann. Die Ausnehmungsflanken 11 und 12 sind hier aufgebogen dargestellt.

Unter anderem jedoch können sich dadurch besondere Verfahrensbedingungen zur Positionierung der Bleche 1 und 2 ergeben, weil die Ausnehmungsflanken 11 und 12 zentrierend wirken können. Außerdem können diese durch deren elastischen Eigenschaften durchaus für einen nahtloser Übergang im Fügebereich sorgen, was zu einer verbesserten stoffschlüssigen Verbindung führen kann, indem beim Einpressen des Anschlussblechs 2 in die v-förmige Ausnehmung 10 sich diese Ausnehmung 10 wenigstens teilweise aufweitet, welche Aufweitmöglichkeiten strichpunktiert angedeutet worden sind.

Außerdem wird von beiden Seiten der Ausnehmungsflanken 11 und 12 ein Wärmeeintrag mit je einer Schweißeinrichtung 7 durchgeführt, um nicht nur beim Fügen die Beschichtung 9 auf beiden Stoßflächen 3', 3" gleichzeitig zu verwenden, sondern auch deren Verdampfen verhindern zu können, welches Verdampfen nachteilig bei einem aus dem Stand der Technik einseitigen Wärmeeintrag auftreten kann, wodurch auch die Prozesssicherheit erhöht werden.

Nach Fig. 4 ist weiters gegenüber den Ausführungsformen nach Fig. 2 und 3 ein besonderer Verlauf der Stoßkante 3 des Anschlussblechs 2 dargestellt. Die Stoßflächen 13 und 14 samt der darauf vorgesehenen Beschichtung 9 verlaufen wellenförmig aufeinander zu. Damit kann vorteilhaft eine vergrößerte Anbindungslänge zwischen den Blechen 1 und 2 erzeugt werden, wobei durch den wellenförmigen Verlauf, der beispielsweise eine Bombierung sein kann, nahezu jeder Anbindungswinkel erzeugt werden kann, um damit die Festigkeit der Schweiß-Lötverbindung zu erhöhen.

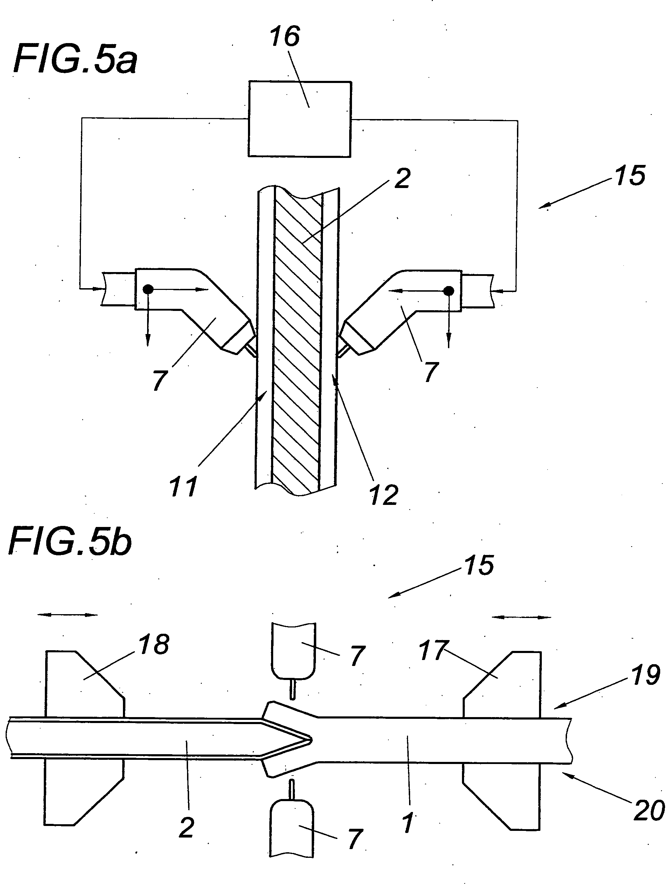

Eine Vorrichtung 15 zur Durchführung des Verfahrens ist nach den Figuren 5a und 5b in vereinfachter Darstellung gezeigt. Die Seitenansicht nach Fig. 5a zeigt zwei Brenner 7, die entlang der Stoßstelle der beiden Bleche 1 und 2 geführt werden. Zu diesem Zweck sind die Brenner 7 auf Bewegungsachsen, die nur schemenhaft dargestellt worden sind, über eine Steuereinrichtung 16 geführt. Zwei als Halterung ausgeführte, verfahrbare und auch kühlbare Spannbacken 17 und 18 spannen die Bleche 1 und 2 ein und werden zum Ausrichten und Aneinanderstoßen der Bleche 1 und 2 verwendet. Wie bereits erwähnt, wird mit einem Lichtbogen 8 des Brenners 7 ein stoffschlüssiges Fügen der beiden Bleche 1 und 2 hergestellt, wobei für besondere ideale Verfahrensbedingungen wenigstens zwei je auf gegenüberliegenden Blechseiten 19 und 20 angeordnete Brenner 7 mit deren Lichtbogen 8 auf einen gemeinsamen Fügebereich 6 der Stoßstelle gerichtet sind.

Für diese Vorrichtung 15 und das erfindungsgemäße Verfahren haben sich insbesondere Stahlbleche mit einer Dicke von 0,5 bis 3mm, bevorzugt 0,6 bis 2mm, vorzugsweise 0,7 bis 1,5mm, und Aluminiumbleche mit einer Dicke von 1 bis 5mm, bevorzugt 1 bis 3mm, vorzugsweise 1 bis 2,5mm als vorteilhaft herausgestellt. Mit der dargestellten Vorrichtung 15 konnte außerdem eine Nahtausbildung von 60 bis 300cm pro Minute erreicht werden, ohne damit Abstriche in der Verbindungsfestigkeit in Kauf nehmen zu müssen. Ebenso lassen sich aber auch dickere Bleche von 10 bis zu 20mm Dicke problemlos mit dem beschriebenen Verfahren verbinden. Außerdem lassen sich mit dem erfindungsgemäßen Verfahren Überhöhungen aufgrund unterschiedlicher Blechdicken vorteilhaft verringern, wobei damit auch zusätzlich die Festigkeit durch eine Vergrößerung der Anbindungsfläche steigen kann. Des Weiteren muss nicht unbedingt bei dicken Blechen von beiden Seiten synchron auf die Verbindungsstelle schweißgelötet werden, sondern es kann jede Seite für sich schweißgelötet werden. Die erhöhte Blechdicke des Anschlussblechs bzw. Stahlblechs kann nämlich vorteilhaft die Verdampfungsgefahr der Beschichtung verringern. Hinzu kommt, dass bei vergleichsweise dicken Blechen eine verminderte Zufuhr eines Zusatzwerkstoffs eintreten kann.

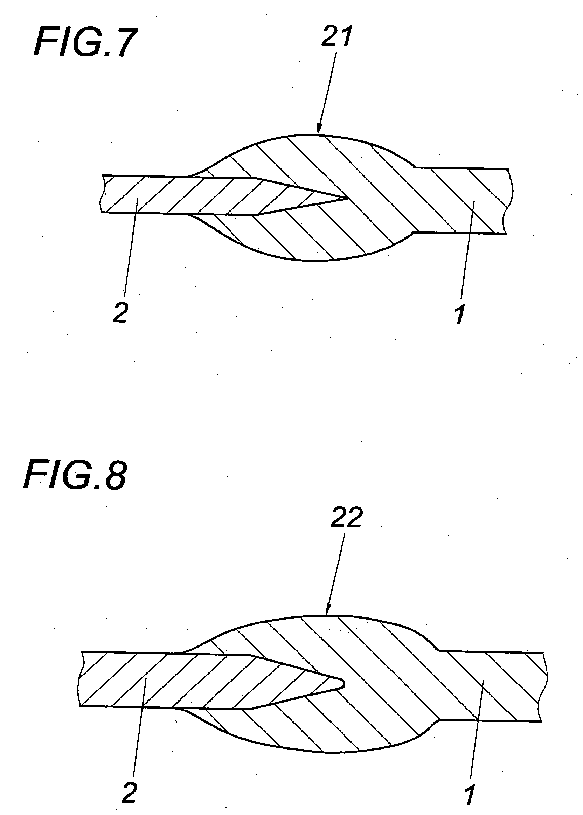

Beispielsweise wird nun nach Fig. 7 eine Schweißlötverbindung 21 zwischen einem als Anschlussblech 2 ausgeführten Stahlblech der Güte DX54+Z140 mit einer Stärke von 1mm und ein als Endblech 1 ausgeführten Aluminiumblech der Güte AW6016 mit einer Blechstärke von 1,2mm dargestellt. Erfindungsgemäß kann damit eine Streckgrenze Rp0,2 von 132 MPa bzw. eine Zugfestigkeit Rm von 239 MPa (jeweils bezogen auf den Aluminiumquerschnitt) ermöglicht werden.

Die nach Fig. 8 dargestellte Schweißlötverbindung 22 ist zwischen einem als Anschlussblech 2 ausgeführten Stahlblech der Güte DX54+Z140 mit einer Stärke von 1,2mm und einem als Endblech 1 ausgeführten Aluminiumblech der Güte AW6181 mit einer Blechstärke von 1,5mm vorgesehen. Hier konnte eine Streckgrenze Rp0,2 von 126 MPa bzw. eine Zugfestigkeit Rm von 210 MPa (jeweils bezogen auf den Aluminiumquerschnitt) ermöglicht werden.

## Patentansprüche

1. Verfahren zum stoffschlüssigen Fügen von zwei einen unterschiedlichen Schmelzpunkt aufweisenden Blechen, von denen das eine Endblech einen Leichtmetallwerkstoff, insbesondere Aluminiumwerkstoff, und das andere Anschlussblech einen Eisen- und/oder Titanwerkstoff aufweist, wobei auf wenigstens einer der geneigt zueinander verlaufenden Stoßflächen der Stoßkante des Anschlussblechs wenigstens teilweise eine Beschichtung vorzugsweise auf einer Zink- oder Aluminiumbasis vorgesehen ist, bei welchem Verfahren beide Bleche aneinanderstoßend unter Verwendung eines Zusatzwerkstoffs auf Leichtmetallbasis, insbesondere auf Aluminiumbasis, entlang deren gemeinsamen Stoßstelle schweißgelötet gefügt werden, **dadurch gekennzeichnet, dass** vor dem Fügen an der Stoßkante (4) des Endblechs (1) eine Ausnehmung (10) zur Aufnahme zumindest eines Teils der beschichteten Stoßkante (3) des Anschlussblechs (2) eingebracht wird, wobei beim Fügen wenigstens teilweise über eine, die Beschichtung (9) des Anschlussblechteils überdeckende Ausnehmungsflanke (11 bzw. 12) der Ausnehmung (10) schweißgelötet wird.

2. Verfahren nach Anspruch 1, **dadurch gekennzeichnet, dass** im Endblech (1) eine Ausnehmung (10) derart eingebracht wird, dass deren beiden Ausnehmungsflanken (11 und 12) beim Fügen teilweise beide Stoßflächen (3', 3") der Stoßkante (3) des Anschlussblechs (2) überdecken.

3. Verfahren nach Anspruch 1 oder 2, **dadurch gekennzeichnet, dass** die Ausnehmung (10) in die Stoßkante des Endblechs (1) eingepresst wird.

4. Verfahren nach Anspruch 1 oder 2, **dadurch gekennzeichnet, dass** die Stoßkante (4) des Endblechs (1) für die beiden Ausnehmungsflanken (11 und 12) eingeschlitzt und von diesen Ausnehmungsflanken (11 und 12) wenigstens eine für die Ausnehmung (10) aufgebogen wird.

5. Verfahren nach Anspruch 3 oder 4, **dadurch gekennzeichnet, dass** die Stoßkante (3) des Anschlussblechs (2) in die insbesondere v-förmige Ausnehmung (10) eingepresst wird, um diese Ausnehmung (10) wenigstens teilweise aufzuweiten.

6. Verfahren nach einem der Ansprüche 1 bis 5, **dadurch gekennzeichnet, dass** in eine Stoßfläche (13, 14) des Anschlussblechs (2) ein wellenförmiger Verlauf eingebracht wird.

7. Verfahren nach einem der Ansprüche 1 bis 6, **dadurch gekennzeichnet, dass** zum Fügen die aneinanderstoßenden Bleche (1 und 2) in kühlbare und von einander beabstandete Spannbacken (17, 18) eingespannt werden.

8. Verfahren nach einem der Ansprüche 1 bis 7, **dadurch gekennzeichnet, dass** über beide Ausnehmungsflanken (11 und 12) gleichzeitig zur Schaffung eines gemeinsamen Fügebereichs (6) schweißgelötet wird.

## Claims

1. Method for cohesive joining of two metal sheets having a different melting point, of which the one sheet, the end sheet, exhibits a light metal material, more particularly aluminum material, and the other, connecting sheet exhibits an iron and/or titanium material, wherein a coating, more particularly on the basis of zinc or aluminum, is provided, at least in part, on at least one of the abutting surfaces of the abutting edge of the connecting sheet, which run at an incline relative to one another, in which method the two sheets are joined together by brazing, abutting one another, using an additional material on the basis of a light metal, more particularly on the basis of aluminum, along their common joint, **characterized in that**, before joining, a recess (10) for accommodating at least a part of the coated abutting edge (3) of the connecting sheet (2) is introduced into the abutting edge (4) of the end sheet (1), wherein during joining, brazing is carried out at least partially over a recess flank (11 or 12, respectively) of the recess (10), which flank covers the coating (9) of the connecting sheet part.

2. Method according to claim 1, wherein a recess (10) is introduced into the end sheet (1) in such a manner that its two recess flanks (11 and 12) partially cover both abutting surfaces (3', 3") of the abutting edge (3) of the connecting sheet (2) during joining.

3. Method according to claim 1 or 2, wherein the recess (10) is pressed into the abutting edge of the end sheet (1).

4. Method according to claim 1 or 2, wherein the abutting edge (4) of the end sheet (1) is slit for the two recess flanks (11 and 12), and at least one of these recess flanks (11 and 12) is bent open for the recess (10).

5. Method according to claim 3 or 4, wherein the abutting edge (3) of the connecting sheet (2) is pressed into the recess (10), which is more particularly V-shaped, in order to at least partially widen this recess (10).

6. Method according to one of the claims 1 to 5, wherein a wave-shaped progression is introduced into an abutting surface (13, 14) of the connecting sheet (2).

7. Method according to one of the claims 1 to 6, wherein for joining, the abutting sheets (1 and 2) are clamped into clamping jaws (17, 18) that can be cooled and are spaced apart from one another.

8. Method according to one of the claims 1 to 7, wherein brazing is carried out over both recess flanks (11 and 12) at the same time, for creation of a common joining region (6).

## Revendications

1. Procédé pour assembler par solidarité de matière deux tôles présentant des points de fusion différents, dont une tôle d'extrémité contenant un matériau à base de métal léger, de préférence d'aluminium, et une tôle d'assemblage en matériau à base de fer et/ou de titane, dans lequel, sur au moins une des surfaces d'about inclinées l'une par rapport à l'autre, le bord d'about de la tôle d'assemblage comporte au moins en partie un revêtement, de préférence à base de zinc ou d'aluminium, les deux tôles étant assemblées dans le procédé le long de leur ligne d'aboutement commune par soudobrasage bout à bout en utilisant un métal d'apport à base de métal léger, en particulier à base d'aluminium, **caractérisé en ce qu'**avant l'assemblage, un évidement (10) est formé sur le bord d'about (4) de la tôle d'extrémité (1) pour recevoir au moins une partie du bord d'about revêtu (3) de la tôle d'assemblage (2), le soudobrasage passant au moins en partie, lors de l'assemblage, par-dessus un flanc d'évidement (11 ou 12) de l'évidement (10) qui recouvre le revêtement (9) de la partie de tôle d'assemblage.

2. Procédé selon la revendication 1, **caractérisé en ce qu'**un évidement (10) est formé dans la tôle d'extrémité (1) de telle manière que ses deux flancs d'évidement (11 et 12) recouvrent en partie, lors de l'assemblage, les deux surfaces d'about (3', 3") du bord d'about (3) de la tôle d'assemblage (2).

3. Procédé selon la revendication 1 ou 2, **caractérisé en ce que** l'évidement (10) est embouti dans le bord d'about de la tôle d'extrémité (1).

4. Procédé selon la revendication 1 ou 2, **caractérisé en ce que** le bord d'about (4) de la tôle d'extrémité (1) est fendue pour former les deux flancs d'évidement (11 et 12) et au moins un de ces flancs d'évidement (11 et 12) est recourbé pour former l'évidement (10).

5. Procédé selon la revendication 3 ou 4, **caractérisé en ce que** le bord d'about (3) de la tôle d'assemblage (2) est pressé dans l'évidement (10) en particulier en forme de v pour ouvrir au moins en partie cet évidement (10).

6. Procédé selon l'une des revendications 1 à 5, **caractérisé en ce qu'**une forme ondulée est réalisée dans une surface d'about (13, 14) de la tôle d'assemblage (2).

7. Procédé selon l'une des revendications 1 à 6, **caractérisé en ce que** pour l'assemblage, les tôles (1 et 2) mises bout à bout sont serrées dans des mors de serrage (17, 18) pouvant être refroidis et écartés l'un de l'autre.

8. Procédé selon l'une des revendications 1 à 7, **caractérisé en ce que** les deux flancs d'évidement (11 et 12) sont soudobrasés simultanément pour créer une zone de joint (6) commune.
